# EUROPEAN PATENT APPLICATION

(11) **EP 3 124 108 A1**
(43) Date of publication of application: **01.02.2017**
(21) Application number: 15770309.1
(22) Date of filing: 25.03.2015
(51) Int. Cl.: B01D 71/64, B01D 53/22, B01D 69/08, B01D 71/66, C08G 73/10

(54) **ASYMMETRIC GAS SEPARATION MEMBRANE, AND METHODS FOR SEPARATING AND RECOVERING GASES**

(30) Priority: 27.03.2014 JP 2014066885
(71) Applicant: UBE Industries, Ltd., Yamaguchi 755-8633 (JP)
(72) Inventor: NAKAMURA, Makoto, Ichihara-shi Chiba 290-0045 (JP); OKABORI, Shihomi, Ichihara-shi Chiba 290-0045 (JP); YOSHINAGA, Toshimune, Ichihara-shi Chiba 290-0045 (JP); HOSHINO, Harutoshi, Ichihara-shi Chiba 290-0045 (JP); KANOUGI, Tomonori, Ichihara-shi Chiba 290-0045 (JP)
(74) Representative: Forstmeyer, Dietmar
(86) International application number: PCT/JP2015/059247
(87) International publication number: WO 2015/147103

(57) **Abstract**

Disclosed is an asymmetric gas separation membrane made of a soluble aromatic polyimide having a specific repeating unit, the soluble aromatic polyimide including: as a tetracarboxylic acid component, a biphenyl structure and a phenyl structure; as a diamine component, a 3,3'-diaminodiphenyl sulphone and a diaminodibenzothiophene, a diaminodibenzothiophene=5,5-dioxide, a diaminothioxanthene-10,10-dione, or a diaminothioxanthene-9,10,10-trione. Disclosed is a method for selectively separating and recovering a specific gas species from a mixed gas composed of a plurality of gas species using the asymmetric gas separation membrane, a method for selectively separating and recovering a nitrogen-rich gas from air using the asymmetric gas separation membrane, and a method for selectively separating carbon dioxide gas from a mixed gas containing carbon dioxide and methane and recovering methane-rich gas using the asymmetric gas separation membrane.

## Description

### Technical Field

This invention relates to an asymmetric gas separation membrane made of a soluble aromatic polyimide having a specific repeating unit and exhibiting excellent gas separation performance as well as improved mechanical characteristics. It also relates to a method for gas separation and recovery using the asymmetric gas separation membrane.

### Background Art

Patent Literature 1 below discloses an asymmetric hollow fiber separation membrane made of an aromatic polyimide prepared from 4,4'-(hexafluoroisopropylidene)diphthalic acid and biphenyltetracarboxylic acid as a tetracarboxylic acid component and a diaminodiphenylene sulfone (the same as the diaminodibenzothiophene 5,5-dioxide, hereinafter described) and others as a main diamine component.

Patent Literature 2 below discloses an asymmetric hollow fiber separation membrane made of an aromatic polyimide obtained from a tetracarboxylic acid component mainly comprising 2,2-bis(3,4-dicarboxyphenyl)hexafluoropropane (the same as 4,4'-(hexafluoroisopropylidene)diphthalic acid described supra) and pyromellitic acid and an aromatic diamine component mainly comprising a diaminodibenzothiophene.

Patent Literature 3 below discloses an asymmetric hollow fiber separation membrane made of an aromatic polyimide obtained from 4,4'-(hexafluoroisopropylidene)diphthalic acid and biphenyltetracarboxylic acid as a tetracarboxylic acid component and a diaminodibenzothiophene 5,5-dioxide and a 3,3'-diaminodiphenyl sulfone as a main diamine component.

### Citation List

### Patent Literature

Patent Literature 1: EP 0446949A2
Patent Literature 2: US 5286539
Patent Literature 3: JP 2006-297184

### Summary of Invention

The highest O₂/N₂ separation ratio achieved by the gas separation membrane disclosed in Patent Literature 1 is 4.8, and that of Patent Literature 2 is 4.9. There still is a demand for further improvement on separation ratio.

The gas separation membrane of Patent Literature 3 lacks mechanical characteristics for practical use, leaving room for improvement on mechanical characteristics.

An object of the invention is to provide an asymmetric gas separation membrane made of a soluble aromatic polyimide having a specific repeating unit and exhibiting improved mechanical characteristics as well as excellent gas separation performance. Another object of the invention is to provide a gas separation and recovery method using the asymmetric gas separation membrane.

The present invention relates to an asymmetric gas separation membrane made of a soluble aromatic polyimide, the aromatic polyimide including a repeating unit represented by chemical formula (1): 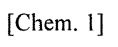 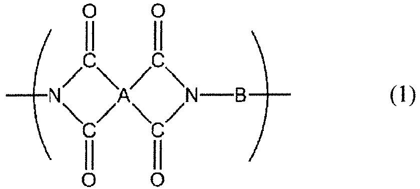 wherein A comprises 10 to 95 mol% of a tetravalent subunit A1 having a biphenyl structure represented by chemical formula (2) 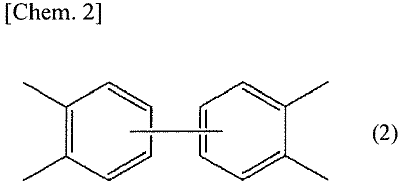 and 5 to 50 mol% of a tetravalent subunit A2 having a phenyl structure represented by chemical formula (3): and

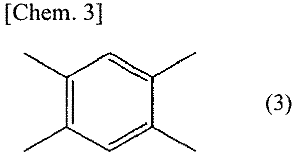

B comprises 40 to 90 mol% of a divalent subunit B1 represented by chemical formula (4) and/or a divalent subunit B2 represented by chemical formula (5), 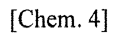 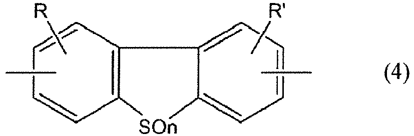 wherein R and R' each represent a hydrogen atom or an organic group; and n represents 0, 1 or 2, 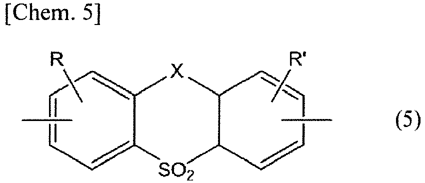
wherein R and R' each represent a hydrogen atom or an organic group; and X represents -CH₂- or -CO-;
and 10 to 60 mol% of a divalent subunit B3 represented by chemical formula (6): 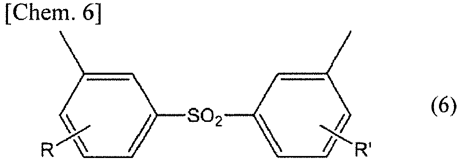
wherein R and R' each represent a hydrogen atom or an organic group.

Further, the present invention relates to the above-mentioned asymmetric hollow fiber gas separation membrane, wherein A further includes 10 to 50 mol% of a tetravalent subunit A3 having a diphenylhexafluoropropane structure represented by chemical formula (7):

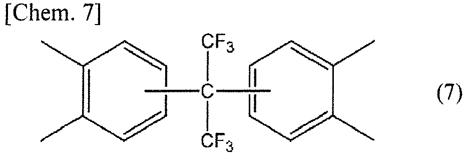

Further, the present invention relates to the above-mentioned asymmetric gas separation membrane, wherein B includes 50 to 90 mol% of the subunit B1, the subunit B1 being a divalent subunit derived from 3,7-diamino-dimethyldibenzothiophene 5,5-dioxide by removing the amino groups.

Further, the present invention relates to the above-mentioned asymmetric hollow fiber gas separation membrane which has such gas separation performance as to achieve an oxygen gas permeance (P'_{O2}) of 2 × 10⁻⁵ cm³(STP)/(cm²·sec·cmHg) or more and a ratio of oxygen gas permeance to nitrogen gas permeance (P'_{O2}/P'_{N2}) of 6.0 or more.

The invention also relates to a method for selectively separating and recovering a specific gas species from a mixed gas composed of a plurality of gas species, specifically a method for selectively separating and recovering a nitrogen-rich gas from air, a method for selectively separating carbon dioxide gas from a mixed gas containing carbon dioxide and methane and recovering methane-rich gas, and a method for selectively separating and recovering hydrogen gas from a mixed gas containing hydrogen gas.

The invention also relates to a method including selectively separating water vapor from a water vapor-containing gas using the asymmetric gas separation membrane and recovering dehumidified gas or humidifying a gas to recover a humidified gas.

### Advantageous Effects of Invention

The invention provides as asymmetric gas separation membrane having high gas separation performance, especially a high gas separation factor, and high mechanical strength. The asymmetric gas separation membrane of the invention exhibits excellent performance in gas separation, for example, between oxygen gas and nitrogen gas, between carbon dioxide gas and methane gas, and between hydrogen gas and methane gas. Therefore, it is well suited for selectively separating and recovering a specific gas, for example, for recovering a nitrogen-rich gas from air, recovering a methane-rich gas form a mixed gas containing carbon dioxide and methane gas, or recovering hydrogen-rich gas from a mixed gas containing hydrogen gas and methane gas. It is also well suited to separate water vapor from a water vapor-containing gas in order to recover dehumidified gas or to humidify a gas to obtain a humidified gas.

### Description of Embodiments

The asymmetric gas separation membrane of the invention is made of a soluble aromatic polyimide having a specific repeating unit and has an asymmetric structure composed of an extremely thin, dense layer primarily performing a gas separation function (preferably with a thickness of 0.001 to 5 µm) and a relatively thick, porous layer primarily performing a dense layer-supporting function (preferably with a thickness of 10 to 2000 µm). The asymmetric gas separation membrane of the invention is preferably an asymmetric hollow fiber gas separation membrane having an inner diameter of about 10 to 3000 µm and an outer diameter of about 30 to 7000 µm and exhibiting improved gas separation performance.

The aromatic polyimide forming the asymmetric hollow fiber gas separation membrane of the invention is represented by the repeating unit of chemical formula (1).

The tetravalent unit A derived from a tetracarboxylic acid component includes 10 to 90 mol%, preferably 30 to 70 mol% of the subunit A1 having a biphenyl structure represented by chemical formula (2) and 5 to 50 mol%, preferably 10 to 40 mol%, of the subunit A2 having a phenyl structure represented by chemical formula (3), each based on the total amount of the unit A. The tetravalent unit A preferably further includes 10 to 50 mol%, more preferably 10 to 40 mol%, of the subunit A3 having a diphenyl hexafluoropropane structure represented by chemical formula (7) relative to the total amount of the unit A. If the proportion of the biphenyl structure is less than 10 mol%, the resulting polyimide often has reduced gas separation performance. If it is more than 90 mol%, the resulting polyimide can have reduced gas permeability, and it tends to be difficult to obtain a high performance gas separation membrane. If the phenyl structure is less than 5 mol%, the resulting asymmetric polyimide membrane tends to have reduced strength and elongation and may be impractical for the purpose. If it exceeds 50 mol%, the polyimide as obtained by polymerization is liable to gelate, or the resulting polyimide membrane can have insufficient selective permeability. If the diphenylhexafluoropropane structure exceeds 50 mol%, the resulting polyimide may have reduced gas separation performance, making it difficult to provide a high-performance gas separation membrane.

The divalent unit B derived from a diamine component includes 40 to 90 mol%, preferably 50 to 80 mol%, of the subunit B1 represented by chemical formula (4) and/or the subunit B2 represented by chemical formula (5) and 10 to 60 mol%, preferably 20 to 50 mol%, of the subunit B3 having a diphenyl sulfone structure represented by chemical formula (6) in which phenyl groups are bonded at their 3- and 3'-positions, each based on the total amount of the unit B. If the diphenyl sulfone structure of formula (6) in which phenyl groups are bonded at their 3- and 3'-positions is less than 10 mol%, the polyimide can fail to exhibit improved gas separation performance. If it is more than 60 mol%, the polyimide tends to have difficulty in making a satisfactory asymmetric structure.

The monomers providing each subunit of the aromatic polyimide will be described in sequence.

The subunit having a biphenyl structure represented by formula (2) is derived from a biphenyltetracarboxylic acid or a derivative thereof, such as a dianhydride or an ester, as a tetracarboxylic acid component. Examples of suitable biphenyltetracarboxylic acids and their derivatives include 3,3',4,4'-biphenyltetracarboxylic acid, 2,3,3',4'-biphenyltetracarboxylic acid, 2,2',3,3'-biphenyltetracarboxylic acid, and their dianhydride and esters. Among them, 3,3',4,4'-biphenyltetracarboxylic acid or its dianhydride or ester is preferred.

The subunit having a phenyl structure represented by formula (3) is formed using pyromellitic acid or its dianhydride or ester as a tetracarboxylic acid component.

The subunit having a diphenylhexafluoropropane structure represented by formula (7) is formed using 4,4'-(hexafluoroisopropylidene)diphthalic acid or a dianhydride or ester thereof as a tetracarboxylic acid component.

The subunits having the structures represented by chemical formulae (4) and (5) are formed by using aromatic diamines represented by chemical formulae (8) and (9), respectively, as a diamine component. 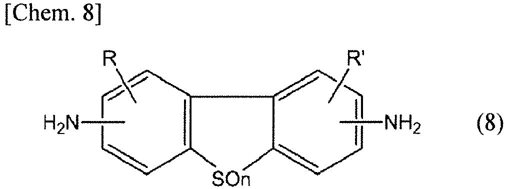 wherein R and R' each represent a hydrogen atom or an organic group (preferably an alkyl group having 1 to 5 carbon atoms); and n is 0, 1, or 2. 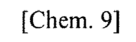 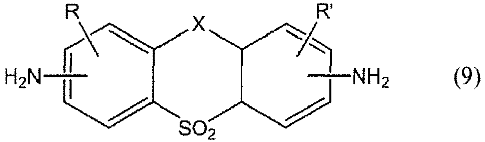 wherein R and R' each represent a hydrogen atom or an organic group (preferably an alkyl group having 1 to 5 carbon atoms); and X represents -CH₂- or -CO-.

Preferred examples of the aromatic diamine represented by formula (8) include diaminodibenzothiophenes (n = 0 in formula (8)) which are represented by chemical formula (10) and diaminodibenzothiophene 5,5-dioxides (n = 2 in formula (8)) which are represented by chemical formula (11). 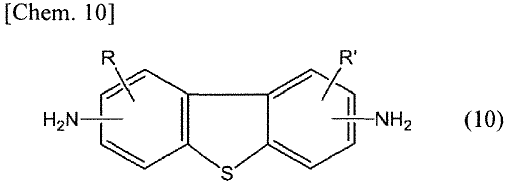 wherein R and R' each represent a hydrogen atom or an organic group. 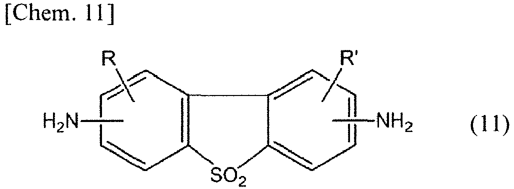 wherein R and R' each represent a hydrogen atom or an organic group.

Specific examples of the diaminodibenzothiophene of formula (10) include 3,7-diamino-2,8-dimethyldibenzothiophene, 3,7-diamino-2,6-dimethyldibenzothiophene, 3,7-diamino-4,6-dimethyldibenzothiophene, 2,8-diamino-3,7-dimethyldibenzothiophene, 3,7-diamino-2,8-diethyldibenzothiophene, 3,7-diamino-2,6-diethyldibenzothiophene, 3,7-diamino-4,6-diethyldiblenzothiophene, 3,7-diamino-2,8-dipropyldibenzothiophene, 3,7-diamino-2,6-dipropyldibenzothiophene, 3,7-diamino-4,6-dipropyldibenzothiophene, 3,7-diamino-2,8-dimethoxydibenzothiophene, 3,7-diamino-2,6-dimethoxydibenzothiophene, and 3,7-diamino-4,6-dimethoxydibenzothiophene.

Specific examples of the diaminodibenzothiophene 5,5-dioxide of formula (11) include 3,7-diamino-2,8-dimethyldibenzothiophene 5,5-dioxide, 3,7-diamino-2,6-dimethyldibenzothiophene 5,5-dioxide, 3,7-diamino-4,6-dimethyldibenzothiophene 5,5-dioxide, 2,8-diamino-3,7-dimethyldibenzothiopheen 5,5-dioxide, 3,7-diamino-2,8-diethyldibenzothiophene 5,5-dioxide, 3,7-diamino-2,6-diethyldibenzothiophene 5,5-dioxide, 3,7-diamino-4,6-diethyldibenzothiopehen 5,5-dioxide, 3,7-diamino-2,8-dipropyldibenzothiophene 5,5-dioxide, 3,7-diamino-2,6-dipropyldibenzothiophene 5,5-dioxide, 3,7-diamino-4,6-dipropyldibenzothiophene 5,5-dioxide, 3,7-diamino-2,8-dimethoxydibenzothiophene 5,5-dioxide, 3,7-diamino-2,6-dimethoxydibenzothiophene 5,5-dioxide, and 3,7-diamino-4,6-dimethoxydibenzothiophene 5,5-dioxide.

Specific examples of diaminothioxanthene-10,10-diones (X = -CH₂- in formula (9)) include 3,6-diaminothioxanthene-10,10-dione, 2,7-diaminothioxanthene-10, 10-dione, 3,6-diamino-2,7-dimethylthioxanthene-10,10-dione, 3,6-diamino-2,8-diethylthioxanthene-10,10-dione, 3,6-diamino-2,8-dipropylthioxanthene-10,10-dione, and 3,6-diamino-2,8-dimethoixythioxanthene-10,10-dione.

Specific examples of diaminothioxanthene-9,10,10-triones (X = -CO- in formula (9)) include 3,6-diaminothioxanthene-9,10,10-trione and 2,7-diaminothioxanthene-9,10, 10-trione.

The subunit having a diphenyl sulfone structure represented by formula (6) in which phenyl groups are bonded at their 3- and 3'-positions is obtained using, as diamine component, 3,3'-diaminodiphenyl sulfone or a derivative thereof represented by chemical formula (12), such as 3,3'-diamino-4,4'-dimethyldiphenyl sulfone or 3,3'-diamino-4,4'-diethyldiphenyl sulfone. 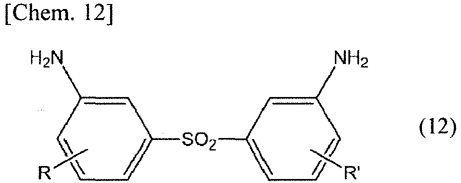 wherein R and R' each represent a hydrogen atom or an organic group (preferably an alkyl group having 1 to 5 carbon atoms).

The diamine component of the aromatic polyimide making the asymmetric hollow fiber gas separation membrane of the invention is preferably a combination of 40 to 90 mol%, relative to the total amount of the unit B, of the diaminodibenzothiophene 5,5-dioxide, particularly 3,7-diamino-dimethyldibenzothiophene 5,5-dioxide, and 10 to 60 mol%, relative to the total amount of the unit B, of the 3,3'-diamino-diphenyl sulfone of formula (11), particularly 3,3'-diaminodiphenyl sulfone. The compound name "3,7-diamino-dimethyldibenzothiophene 5,5-dioxide" as used herein is intended to mean any one of or a mixture of isomers different in the position of the methyl groups. It is usually preferred to use a mixture containing 3,7-diamino-2,8-dimethyldibenzothiophene 5,5-dioxide, 3,7-diamino-2,6-dimethyldibenzothiophene 5,5-dioxide, and 3,7-diamino-4,6-dimethyldibenzothiophene 5,5-dioxide.

The aromatic polyimide forming the asymmetric hollow fiber gas separation membrane may include a monomer component other than the above described tetracarboxylic acid component and diamine component in such a small proportion (usually not more than 20 mol%, preferably not more than 10 mol%) as not to impair the effects of the invention.

The aromatic polyimide forming the asymmetric hollow fiber gas separation membrane of the invention is soluble. As used herein, the term "soluble" means to have high solubility in an organic polar solvent. The aromatic polyimide can easily be obtained in the form of a highly polymerized aromatic polyimide solution by polymerization and imidization of almost equimolar amounts of the tetracarboxylic acid component and the diamine component in an organic polar solvent. Therefore, an asymmetric hollow fiber member can conveniently be formed by a dry/wet spinning process using the resulting aromatic polyimide solution.

The aromatic polyimide solution is suitably prepared by (i) a two stage process in which a tetracarboxylic acid component and a diamine component are added in a predetermined compositional ratio into an organic polar solvent and allowed to polymerize at a low temperature around room temperature to form a polyamic acid, which is then thermally imidized by heating or chemically imidized by the addition of, e.g., pyridine or (ii) a single stage process in which a tetracarboxylic acid component and a diamine component are added in a predetermined compositional ratio into an organic polar solvent and polymerized/imidized at a high temperature of about 100° to 250°C, preferably about 130° to 200°C. The thermal imidization is advisably carried out while removing released water or alcohol from the reaction system. The amounts of the tetracarboxylic acid component and the diamine component to be added to the organic polar solvent are preferably such that the concentration of the polyimide formed in the solvent ranges from about 5 to 50 wt%, preferably 5 to 40 wt%.

The aromatic polyimide solution as obtained by polymerization and imidization may be subjected directly to spinning. Otherwise, the resulting aromatic polyimide solution may be poured into a non-solvent thereby to precipitate the aromatic polyimide, and the precipitate collected is dissolved in an organic polar solvent to prepare an aromatic polyimide solution having a predetermined concentration for use in spinning.

The aromatic polyimide solution to be spun preferably has a polyimide concentration of 5 to 40 wt%, more preferably 8 to 25 wt%, and a solution viscosity of 100 to 15000 poise, more preferably 200 to 10000 poise, even more preferably 300 to 5000 poise, at 100°C. With a viscosity less than 100 poise, the polyimide solution can form a uniform membrane (film) but has difficulty in forming an asymmetric hollow fiber membrane having high mechanical strength. A highly viscous polyimide solution with a viscosity more than 15000 poise is difficult to extrude from a spinneret, resulting in a difficulty in forming an asymmetric hollow fiber membrane of desired shape. The solution viscosity can be measured by the method described in Examples given later.

The organic polar solvent is not particularly limited as long as it is conveniently capable of dissolving the aromatic polyimide formed. Examples of useful organic polar solvents include phenol-based solvents, such as phenols, e.g., phenol, cresol, and xylenol, catechols having two hydroxyl groups directly bonded to a benzene ring, e.g., catechol and resorcin, and halogenated phenols, e.g., 3-chlorophenol, 4-chlorophenol (the same as p-chlorophenol), 3-bromophenol, 4-bromophenol, and 2-chloro-5-hydroxytoluene; and amide solvents, such as N-methyl-2-pyrrolidone, N,N-dimethylformamide, N,N-diethylformamide, N,N-dimethylacetamide, and N,N-diethylacetamide; and mixtures thereof.

The polyimide asymmetric gas separation membrane of the invention can conveniently be obtained by spinning in a dry/wet process (i.e., dry/wet spinning process) using the aromatic polyimide solution described above. The dry/wet process, which is a phase inversion process proposed by Loeb, et al. (see, e.g., U.S. Patent 3133132), involves forming a polymer solution into film, evaporating the solvent of the surface of the film to form a thin dense layer (separation layer), then immersing the film into a coagulation bath (a solvent miscible with the solvent of the polymer solution and incapable of dissolving the polymer) to induce phase separation thereby to form micropores, whereby a porous layer (supporting layer) is formed. The dry/wet spinning process is a method by which a hollow fiber membrane is formed by utilizing the dry/wet process with the use of a spinneret, and is described, for example, in Patent Literatures 1 and 2.

Any spinneret can be used as long as it is designed to extrude the aromatic polyimide solution into a hollow fiber geometry. A tube-in-orifice spinneret is suitable. The temperature of the aromatic polyimide solution to be extruded is generally in the range of about 20° to 150°C, preferably 30° to 120°C. The hollow fiber is spun while feeding a gas or liquid to the inside of the hollow fiber being extruded through the spinneret.

The coagulation bath is preferably substantially incapable of dissolving the aromatic polyimide and miscible with the solvent of the aromatic polyimide solution. Examples of suitable coagulation baths include, but are not limited to, water, lower alcohols, such as methanol, ethanol, and propyl alcohol, ketones having a lower alkyl group, such as acetone, diethyl ketone, and methyl ethyl ketone, and mixtures thereof.

Coagulation is preferably carried by first immersion in a first coagulation bath where the aromatic polyimide solution extruded from the spinneret into a hollow fiber geometry is coagulated to an extent enough to retain its shape and second immersion in a second coagulation bath where the aromatic polyimide solution is thoroughly coagulated. The thus coagulated hollow fiber separation membrane is preferably subjected to solvent substitution treatment to replace the coagulation bath with a solvent such as a hydrocarbon and then dried, followed by heating. It is desirable that the heating is performed at a temperature lower than the softening temperature or the secondary transition temperature of the aromatic polyimide.

The asymmetric hollow fiber gas separation membrane of the invention is a hollow fiber membrane having an asymmetric structure composed of an extremely thin dense layer (preferably 0.001 to 5 µm thick) primarily serving for gas separation performance and a relatively thick porous layer (preferably 10 to 2000 µm thick) supporting the dense layer, having an inner diameter of about 10 to 3,000 µm and an outer diameter of about 30 to 7,000 µm, and exhibiting improved, excellent gas separation performance. More specifically, the asymmetric hollow fiber gas separation membrane of the invention preferably has an oxygen gas permeance (P'_{O2}) of 2 × 10⁻⁵ cm³(STP)/(cm²·sec_{O}cmHg) or more at 50°C and a ratio of oxygen gas permeance to nitrogen gas permeance (P'_{O2}/P'_{N2}) of 6 or more at 50°C.

The gas separation membrane of the invention has an elongation at break of 8% or more, preferably 10% or more, while retaining a breaking strength comparative to conventional hollow fiber membranes. Having such satisfactory mechanical characteristics, the gas separation membrane of the invention is easily modularized on an industrial scale and less prone to break during use so as to withstand high-pressure mixed gas feed.

The asymmetric hollow fiber gas separation membrane of the invention is conveniently used in the form of module. The hollow fiber gas separation membrane, being a hollow fiber, provides a wide membrane area per module and withstands high-pressure feed of a mixed gas, enabling high efficiency gas separation. An ordinary gas separation membrane module is formed as follows. About 100 to 1,000,000 hollow fiber membranes of appropriate length are bound into a bundle. The hollow fibers of the bundle are secured at both ends thereof with a tube sheet made of a thermoplastic resin, etc. to make a hollow fiber membrane element with at least one end of the individual fibers open. The resulting hollow fiber membrane element is set in a housing having at least a mixed gas inlet, a permeate outlet, and a retentate (non-permeate) outlet in such a manner that the space leading to the inside of the individual hollow fibers and the space leading to the outside of the hollow fibers are isolated from each other. In such gas separation membrane module, a gas mixture is fed from the mixed gas inlet to the space in contact with the inside or outside of the hollow fiber membrane. While the mixed gas flows along the hollow fiber membrane, a specific component in the mixed gas selectively passes through the membrane. The permeate gas is discharged from the permeate outlet, while the retentate gas that has not passed through the membrane is discharged from the retentate outlet, thus accomplishing gas separation.

The asymmetric hollow fiber gas separation membrane of the invention is capable of separating and recovering various gas species at a high permselectivity (permeance ratio). A high permselectivity is advantageous in recovering a target gas species at a high recovery. Gas species to be separated are not particularly limited. Examples of gas species that can be suitably separated and recovered using the gas separation membrane of the invention include hydrogen gas, helium gas, carbon dioxide gas, hydrocarbon gases, such as methane and ethane, oxygen gas, and nitrogen gas.

The asymmetric hollow fiber gas separation membrane of the invention is also well suited to separate water vapor from water vapor-containing gas, which is used to obtain dehumidified gas or humidified gas.

### Examples

The invention will now be illustrated in greater detail with reference to Examples, but it should be understood that the invention is not deemed to be limited thereto.

### Method of measurement of solution viscosity:

The solution viscosity of a polyimide solution was measured with a rotational viscometer (shear rate of rotor: 1.75 sec⁻¹) at 100°C.

### Tensile test of hollow fiber membrane:

Before testing, the hollow fiber membrane was heat treated at 250°C. Measurements were made with a tensile tester on an effective length of 20 mm at a tension speed of 10 mm/min. The cross-sectional area of the hollow fiber membrane before the tensile test was calculated from the dimensions measured under an optical microscope.

### Reference Example 1

### Evaluation of mixed gas separation performance of hollow fiber membrane (shell-side feed)

An element for permeation performance evaluation having an effective length of 7 cm was prepared using 10 hollow fiber membranes, a stainless pipe, and an epoxy resin adhesive. The element was put into a stainless steel housing to make a pencil module. A mixed gas containing oxygen and nitrogen was fed to the shell side of the hollow fiber membranes under a pressure of 1 MPaG at a temperature of 50°C to measure the permeate flow rate, the permeate composition, the retentate flow rate, and the retentate composition. The gas permeance was calculated from the permeate flow rate, permeate composition, retentate flow rate, and retentate composition as measured, the feed side pressure, the permeate side pressure, and the effective membrane area.

### Reference Example 2

### Evaluation of pure gas separation performance of hollow fiber membrane (shell-side feed)

An element for permeation performance evaluation having an effective length of 7 cm was prepared using 10 hollow fiber membranes, a stainless pipe, and an epoxy resin adhesive. The element was put into a stainless steel container to make a pencil module. A permeable gas was fed to the shell side of the hollow fiber membranes under a pressure of 1 MPaG at a temperature of 80°C to measure the permeate flow rate. The gas permeance was calculated from the permeate flow rate as measured, the feed side pressure, the permeate side pressure, and the effective membrane area.

### Reference Example 3

### Evaluation of mixed gas separation performance of hollow fiber membrane (boreside feed)

An element for permeation performance evaluation having an effective length of 7 cm was prepared using 10 hollow fiber membranes, a stainless pipe, and an epoxy resin adhesive. The element was put into a stainless steel container to make a pencil module. A mixed gas containing carbon dioxide and methane was fed to the open bores of the hollow fiber membranes under a pressure of 0.7 MPaG at a temperature of 60°C to measure the permeate flow rate, the permeate composition, the retentate flow rate, and the retentate composition. The gas permeance was calculated from the permeate flow rate, permeate composition, retentate flow rate, and retentate composition as measured, the feed side pressure, the permeate side pressure, and the effective membrane area.

### Reference Example 4

### Evaluation of dehumidifying performance of hollow fiber (boreside feed)

An element for water vapor permeation performance evaluation having an effective length of 8 cm was prepared using 20 hollow fiber membranes, a stainless pipe, and an epoxy resin adhesive. The element was put into a stainless steel container to make a pencil module. A given amount of nitrogen gas containing 2800 ppm of water vapor was fed to the open bores of the hollow fiber membranes under a pressure of 0.5 MPaG at a temperature of 30°C to separate water vapor while making part of dehumidified gas to flow in the permeate side (the shell side of the hollow membranes). The dew point temperature each of the retentate gas and the permeate gas was measured with a dew point mirror to obtain the water vapor concentration. The water vapor permeance was calculated from the permeate and retentate flow rates, the feed side pressure, and the effective membrane area.

The compounds used in the following Examples are as follows.
s-BPDA: 3,3',4,4'-biphenyltetracarboxylic acid dianhydride
6FDA: 4,4'-(hexafluoroisopropylidene)-bis(phthalic anhydride) (also called 2,2-bis(3,4-dicarboxyphenyl)hexafluoropropane dianhydride)
PMDA: pyromellitic dianhydride
TSN: a mixture containing 3,7-diamino-2,8-dimethyldibenzothiophene 5,5-dioxide as a main ingredient and isomers thereof having the methyl group(s) on different position(s), i.e., 3,7-diamino-2,6-dimethyldibenzothiophene 5,5-dioxide and 3,7-diamino-4,6-dimethyldibenzothiophene 5,5-dioxide;
MASN: 3,3'-diaminodiphenyl sulfone

### Example 1

In a separable flask equipped with a stirrer and a nitrogen gas inlet tube were put 65 mmol of s-BPDA, 25 mmol of 6FDA, 10 mmol of PMDA, 80 mmol of TSN, and 20 mmol of MASN together with p-chlorophenol as a solvent in such an amount as to give a resulting polymer concentration of 16 wt%. The mixture was stirred in a nitrogen stream at a reaction temperature of 190°C to carry out polymerization-imidization for about 20 hours to prepare an aromatic polyimide solution having a polyimide concentration of 16 wt%. The solution viscosity of the aromatic polyimide solution at 100°C was 1358 poise.

The resulting aromatic polyimide solution was filtered through a 400-mesh metal screen to prepare a dope. The dope was fed to a spinning apparatus equipped with a spinneret for hollow fiber and extruded through the spinneret. The spun hollow fiber was immersed in a first coagulation bath (0°C, 75 wt% aqueous ethanol solution) and then introduced in a second coagulation bath equipped with a pair of guide rolls (0°C, 75 wt% aqueous ethanol solution), where the hollow fiber traveled reciprocally between the guide rolls to coagulate. The resulting hollow fiber was wound on a take-up roll at a speed of 20 m/min to obtain a hollow fiber membrane. The hollow fiber membrane was wound up on a bobbin and washed with ethanol. The ethanol was replaced by isooctane, and the hollow fiber membrane was heated at 100°C to evaporate the isooctane. The hollow fiber was further heat-treated at 250°C for 30 minutes to obtain a desired hollow fiber membrane with an outer diameter of approximately 400 µm and an inner diameter of approximately 250 µm.

The resulting asymmetric hollow fiber membrane was evaluated for mechanical strength and gas separation performance. Evaluation of gas separation performance was conducted in accordance with Reference Example 1. The results obtained are shown in Table 1 below.

### Examples 2 to 5

A hollow fiber membrane was made in the same manner as in Example 1, except for using an aromatic polyimide having the composition shown in Table 1. The mechanical strength and gas separation performance were evaluated in the same manner as in Example 1 to give the results shown in Table 1.

**Table 1**

| | Composition of Separation Membrane (mol%) | | | | | Tensile Test | | | | |
|---|---|---|---|---|---|---|---|---|---|---|
| | Tetracarboxylic Acid Component | | | Diamine Component | | Elongation at Break (%) | Breaking Strength (kgf/mm²) | Permeance, 10⁻⁵× (cm³(STP)/(cm²·s·cmHg) | | P'_{O2}/P'_{N2} |
| | s-BPDA | 6FDA | PMDA | TSN | MASN | | | P'_{O2} | P'_{N2} | |
| Example 1 | 65 | 25 | 10 | 80 | 20 | 10 | 3.9 | 2.8 | 0.5 | 6.1 |
| Example 2 | 55 | 20 | 25 | 80 | 20 | 13 | 3.1 | 2.8 | 0.5 | 6 |
| Example 3 | 45 | 30 | 25 | 60 | 40 | 12 | 3.1 | 2.7 | 0.4 | 6.1 |
| Example 4 | 50 | 25 | 25 | 50 | 50 | 13 | 4.4 | 2 | 0.3 | 6.4 |
| Example 5 | 35 | 15 | 50 | 60 | 40 | 30 | 4.4 | 2.1 | 0.3 | 6.2 |

### Comparative Example 1

A hollow fiber membrane was made in the same manner as in Example 1, except for using an aromatic polyimide having the composition shown in Table 2. The mechanical strength and gas separation performance were evaluated in the same manner as in Example 1 to give the results shown in Table 2.

**Table 2**

| | Composition of Separation Membrane (mol%) | | | | | Tensile Test | | | | |
|---|---|---|---|---|---|---|---|---|---|---|
| | Tetracarboxylic Acid Component | | | Diamine Component | | Elongation at Break (%) | Breaking Strength (kgf/mm²) | Permeance, 10⁻⁵× (cm³(STP)/(cm²·s·cmHg) | | P'_{O2}/P'_{N2} |
| | s-BPDA | 6FDA | PMDA | TSN | MASN | | | P'_{O2} | P'_{N2} | |
| Compara. Example 1 | 80 | 20 | - | 80 | 20 | 5 | 3.5 | 2.5 | 0.4 | 5.9 |

### Example 6

A hollow fiber membrane was made in the same manner as in Example 1, except for changing the polyimide concentration to 18 wt%, the heat treating temperature to 320°C, and the outer and inner diameters to about 190 µm and about 120 µm, respectively. The performance of separating He gas and N₂ gas was evaluated in accordance with Reference Example 2. As a result, the P'_{He} was 55 × 10⁻⁵ cm³(STP)/(cm²·sec·cmHg), and the P'_{He}/P'_{N2} was 87.

### Example 7

The hollow fiber membrane prepared in Example 6 was evaluated for gas separation performance between CO₂ gas and CH₄ gas in accordance with Reference Example 3. As a result, the P'_{CO2} was 10 × 10⁻⁵ cm³(STP)/(cm²·sec·cmHg), and the P'_{CO2}/P'_{CH4} was 35.

### Example 8

The hollow fiber membrane prepared in Example 6 was evaluated for dehumidification performance in accordance with Reference Example 4. As a result, the P'_{H2O} was 3.1 × 10⁻³ cm³(STP)/(cm²·sec·cmHg).

### Industrial Applicability

The invention provides an asymmetric hollow fiber gas separation membrane exhibiting excellent gas separation performance, for example, between oxygen and nitrogen, as well as improved mechanical characteristics.

The asymmetric hollow fiber gas separation membrane of the invention conveniently allows for production of nitrogen from air, recovery and purification of methane from a mixed gas containing carbon dioxide gas and methane gas, separation and recovery of hydrogen from a mixed gas containing hydrogen gas, and dehumidification/humidification of gas.

## Claims

1. An asymmetric gas separation membrane made of a soluble aromatic polyimide, the aromatic polyimide comprising a repeating unit represented by chemical formula (1): 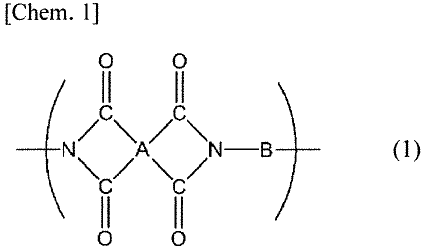 wherein A comprises 10 to 95 mol% of a tetravalent subunit A1 having a biphenyl structure represented by chemical formula (2) and 5 to 50 mol% of a tetravalent subunit A2 having a phenyl structure represented by chemical formula (3): 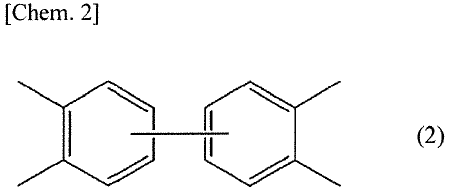 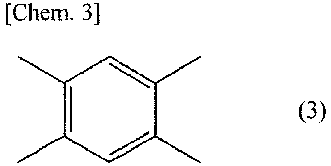 and B comprises 40 to 90 mol% of a divalent subunit B1 represented by chemical formula (4) and/or a divalent subunit B2 represented by chemical formula (5), and 10 to 60 mol% of a divalent subunit B3 represented by chemical formula (6): 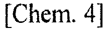 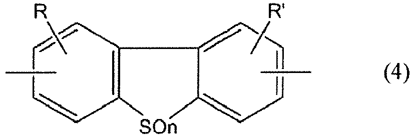 wherein R and R' each represent a hydrogen atom or an organic group; and n represents 0, 1 or 2, 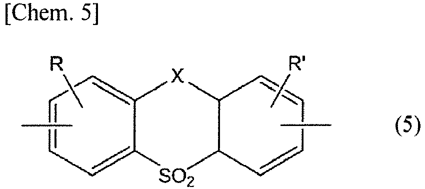 wherein R and R' each represent a hydrogen atom or an organic group; and X represents - CH₂- or -CO-; 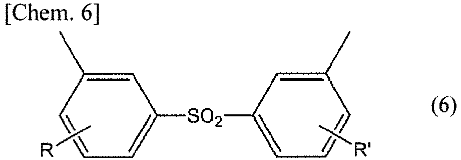 wherein R and R' each represent a hydrogen atom or an organic group.

2. The asymmetric hollow fiber gas separation membrane according to claim 1, wherein A further comprises 10 to 50 mol% of a tetravalent subunit A3 having a diphenylhexafluoropropane structure represented by chemical formula (7):

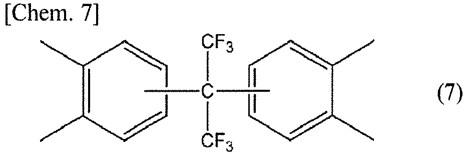

3. The asymmetric gas separation membrane according to claim 1 or 2, wherein B comprises 50 to 90 mol% of the subunit B1, the subunit B1 being a divalent subunit derived from 3,7-diamino-dimethyldibenzothiophene 5,5-dioxide by removing the amino groups.

4. The asymmetric hollow fiber gas separation membrane according to any one of claims 1 to 3, having such gas separation performance as to achieve an oxygen gas permeance (P'_{O2}) of 2 × 10⁻⁵ cm³(STP)/(cm²·sec·cmHg) or more and a ratio of oxygen gas permeance to nitrogen gas permeance (P'_{O2}/P'_{N2}) of 6.0 or more.

5. A method for selectively separating and recovering a specific gas species from a mixed gas containing a plurality of gas species, comprising using the asymmetric gas separation membrane according to any one of claims 1 to 4.

6. A method for selectively separating and recovering a nitrogen-rich gas from air, comprising using the asymmetric gas separation membrane according to any one of claims 1 to 4.

7. A method for selectively separating and recovering a methane-rich gas from a mixed gas containing carbon dioxide and methane, comprising using the asymmetric gas separation membrane according to any one of claims 1 to 4.

8. A method for selectively separating and recovering hydrogen gas from a mixed gas containing hydrogen gas, comprising using the asymmetric gas separation membrane according to any one of claims 1 to 4.

9. A method for obtaining a dehumidified gas, comprising selectively separating water vapor from a gas containing water vapor using the asymmetric gas separation membrane according to any one of claims 1 to 4 and recovering the thus dehumidified gas.

10. A method for obtaining a humidified gas, comprising humidifying a gas using the asymmetric gas separation membrane according to any one of claims 1 to 4 and recovering the thus humidified gas.
